Europäisches Patentamt

European Patent Office

Office européen des brevets

(11) Veröffentlichungsnummer: **0 267 397 B1**

## (12) EUROPÄISCHE PATENTSCHRIFT

(45) Veröffentlichungstag der Patentschrift: **16.09.92**

(51) Int. Cl.5: **B64C 13/50**, H04B 10/00

(21) Anmeldenummer: **87113946.5**

(22) Anmeldetag: **23.07.81**

(60) Veröffentlichungsnummer der früheren Anmeldung nach Art. 76 EPÜ: **0 046 875**

(54) **Anordnung, insbesondere für Luftfahrzeuge, zur Übertragung von Steuersignalen.**

(30) Priorität: **02.09.80 DE 3032918**
**25.03.81 DE 3111722**

(43) Veröffentlichungstag der Anmeldung:
**18.05.88 Patentblatt 88/20**

(45) Bekanntmachung des Hinweises auf die Patenterteilung:
**16.09.92 Patentblatt 92/38**

(84) Benannte Vertragsstaaten:
**FR GB IT SE**

(56) Entgegenhaltungen:
**FR-A- 2 258 611**
**FR-A- 2 391 908**
**GB-A- 2 052 185**
**US-A- 3 076 510**
**US-A- 3 964 020**

**FREOUENZ, Band 31, Heft 12, Dezember 1977, Seiten 364-368; Berlin, DE; K. ERDEL et al.: "Glasfaser-Bussysteme zur Signalüber-tragung in Bordnetzen"**

**L'ONDE ELECTRIOUE, Band 56, Heft 12, De-zember 1976, Seiten 589-596; Paris, FR; T.A. HAWKES: "Systèmes de communications optiques à bord d'avions"**

**IDEEE TRANSACTIONS ON AEROSPACE AND ELECTRONC SYSTEMS, Band AES-11, Heft 5, September 1975, Seiten 841-850; IDEEE, New York, US; G. BELCHER et ak.: "Use of fiber optics in digital automatic flight control sy-stems"**

**WESTINGHOUSE ENGINEER, Band 31, Heft 4, Juli 1971, Seiten 114-119; Pittsburg, US; M.A. GEYER et al.: "Auromatic control or aircraft electrical system reduces wiring and impro-ves reliability"**

(73) Patentinhaber: **Deutsche Airbus GmbH**
**Kreetslag 10**
**W-2103 Hamburg 93(DE)**

(72) Erfinder: **Wendt, Hans Joachim, Ing. (grad.)**
**Harburger Strasse**
**W-2150 Buxtehude(DE)**

## Beschreibung

Es ist allgemein bekannt, daß bei Flugzeugen die Übertragung der Steuerbewegungen vom Piloten z.B. auf die Ruder durch mechanische Einrichtungen wie Seilzüge, Gestänge, Drehwellen oder entsprechende Kombinationen erfolgen kann. Es ist auch bekannt, elektrische digitale Steuersignale über entsprechende Datenleitungen zu den Rudern zu übertragen, wo sie mittels digital ansteuerbarer elektrischer oder hydraulischer Antriebe in entsprechende Steuerbewegungen umgesetzt werden. Hierbei ist jedoch von Nachteil, daß der auf den Datenleitungen ablaufende Datenverkehr durch starke elektromagnetische Felder störbar ist, wie sie im Falle eines Blitzschlages oder eines elektrischen Kurzschlusses auftreten können.

Um diesen Nachteil zu beseitigen, ist vielfach vorgeschlagen worden, die elektrischen Datenleitungen durch Lichtleiter zu ersetzen. Eine derartige Lösung besteht beispielsweise in einem durch Mikroprozessoren gesteuerten seriellen Datenbussystem mit Glasfaserübertragung und Sternkopplerpunkt, das sowohl zentral als auch dezentral organisiert sein kann (Frequenz, Band 31, Nr.12, Dezember 1977, Seiten 364 bis 368). Hierbei sind die einzelnen optronischen Datensender/Empfänger über den Sternkopplerpunkt miteinander verbunden. Damit werden zwar die typischen Nachteile einer elektrischen Datenübertragung vermieden, aber der Ausfall einer Datenleitung führt hier zwangsläufig zum Ausfall der Funktion des über diese Leitung angeschlossenen Sender/Empfängers.

Demgemäß liegt der Erfindung die Aufgabe zugrunde, eine Anordnung, insbesondere für Luftfahrzeuge, zur Übertragung von Steuersignalen derart auszubilden, daß die störungsfreie Funktion des Gesamtsystems auch bei Versagen mehrerer Datenleitungen sichergestellt ist.

Diese Aufgabe wird bei einer gattungsgemäßen Anordnung durch die kennzeichnenden Merkmale des Patentanspruchs 1 gelöst.

Dabei ist insbesondere von Vorteil, daß das gesamte Systems auch bei Ausfall mehrerer Leitungen funktionsfähig bleibt.

Vorteilhafte Weiterbildungen der Erfindung sind in den Unteransprüchen angegeben.

Die Erfindung ist anhand der Zeichnung dargestellt und nachfolgend näher erläutert. Es zeigen

Fig. 1    eine Übersicht über eine Anordnung nach der Erfindung für ein Flugzeug,

Fig. 2    eine Schaltung eines Hauptsteuerkreises,

Fig. 3    eine Schaltung einer Mischereinheit,

Fig. 4    ein Blockschaltbild, eines optronischen Informationssystems,

Fig. 5    ein Anzeige- und Bediengerät und

Fig. 6    ein Blockschaltbild eines Dialog-Gerätes.

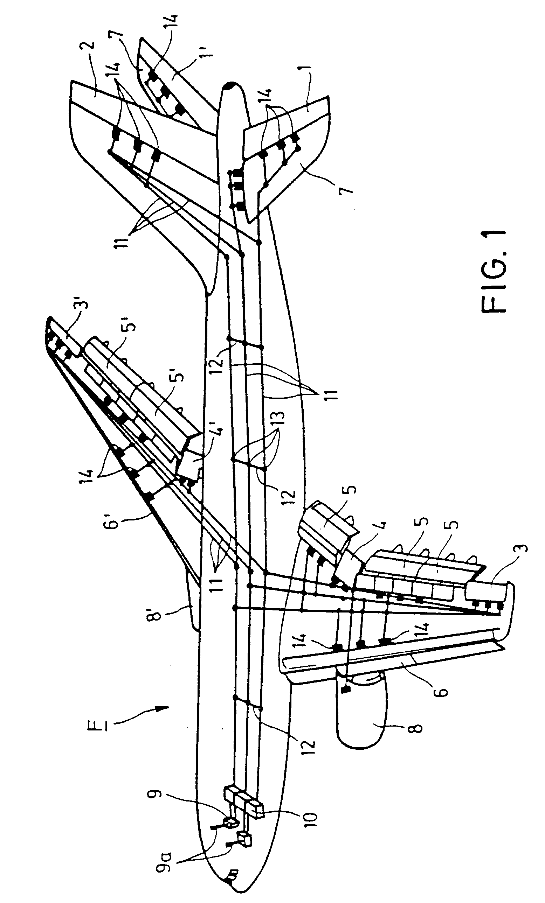

Fig. 1 zeigt eine Übersicht über eine Anordnung zur Übertragung von Steuersignalen für ein Flugzeug F. Das Flugzeug F weist die üblichen Steuerflächen auf, und zwar zwei Höhenruder 1,1', ein Seitenruder 2, zwei Langsamflug-Querruder 3,3', zwei Schnellflug-Querruder 4,4', Landeklappen 5, 5', Nasenklappen 6, 6' und eine Höhenflosse 7. Zum Flugzeug F gehören u. a. die Triebwerke 8, 8' sowie die Steuerorgane 9, wobei die schematische Darstellung die Steuersäulen 9 a und Pedale andeutet. Das Leitungssystem zur Übertragung von Steuersignalen weist hauptsächlich mehrere Signalprozessoren 10 und ein aus Längsleitungen 11 und Querleitungen 12 bestehendes mehrfach vermaschtes Netzwerk aus Lichtleitern auf, das mit adressierbaren Servo-Einheiten 14 in Verbindung steht. Knotenpunkte 13 bestehen dabei aus Verzweigungen bekannter Art, z. B. in Form von Stern- oder T-Kopplern. Die Steuerorgane 9 sind derart ausgeführt, daß sie ein dem Steuerbefehl entsprechendes digitales Lichtsignal liefern. Die an der Peripherie des Netzwerkes angeordneten Servo-Einheiten 14 verfügen über Einrichtungen zur Umwandlung des ankommenden Lichtsignals in eine Steuerbewegung. Außerdem weisen sie Einrichtungen auf, die die momentane Stellung z. B. eines Ruders ermitteln und ein entsprechendes Lichtsignal an die Längsleitungen 11 abgeben. Der zwischen den Signalprozessoren 10 und den über die Längsleitungen 11 angeschlossenen peripheren Geräten ablaufende Datenverkehr wird zyklisch durchgeführt, d. h. die Signalprozessoren 10 geben in festem Abfragetakt adressierte Informationssignale z. B. an die Servo-Einheiten 14 ab, die diese wiederum mit adressierten Informationssignalen beantworten. Der hierbei ablaufende Datenverkehr ist in Form von Telegrammen mit fester Wortlänge definiert. Diese Telegramme sind einer Trägerfrequenz in Form einer digitalen Frequenzmodulation aufgeprägt, wobei das Lichtsignal letztlich eine der Trägerfrequenz entsprechende Amplitudenmodulation aufweist. Hierdurch wird eine sehr hohe Störsicherheit gegenüber eventueller Fremdlichteinstreuung erreicht. Aufgrund der Vermaschung ist sichergestellt, daß das Signal auf vielen Wegen von den Signalprozessoren 10 zu der angesprochenen Servo-Einheit 14 gelangt, wodurch die Zuverlässigkeit des Systems weiter erhöht wird. Das dargestellte System ist dreifach ausgeführt, d. h. im Rumpf, im Flügel sowie in den Leitwerken sind drei Längsleitungen 11 mit entsprechenden Querleitungen 12 angeordnet und pro Ruder, Steuerfläche oder dgl. sind drei Servo-Einheiten 14 vorgesehen. Die Signalprozessoren 10 enthalten den Hauptsteuerkreis der gesamten Anordnung. Auch diese Einheit ist zur Steigerung der Zuverlässigkeit dreifach ausgeführt.

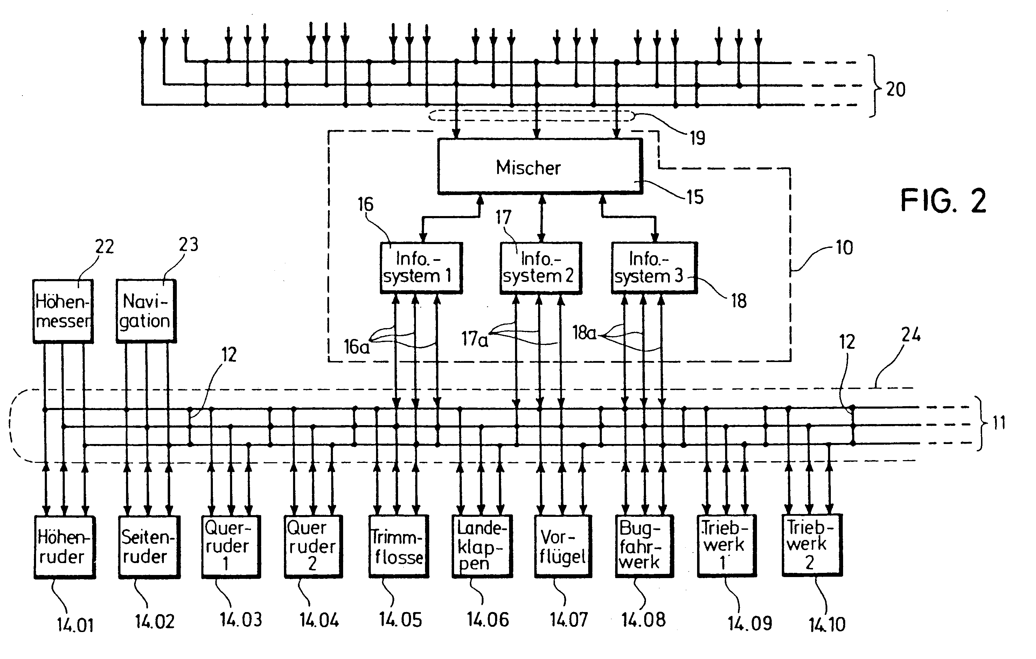

Fig. 2 zeigt die Schaltung von einem der Signalprozessoren 10, die im wesentlichen aus einem Mischer 15 und drei Informationssystemen 16, 17 und 18 besteht. Über dreifach ausgeführte Lichtleitungen 19 ist der Mischer 15 mit einem vermaschten Geber-Netzwerk 20 aus Lichtleitern verbunden. Der dreifache Ausgang des Mischers 15 ist mit je einer der Informations-Einheiten 16 bis 18 verbunden. Jede Einheit 16 bis 18 weist weiterhin je drei Anschluß-Lichtleitungen 16a bis 18a auf, die jeweils mit dem Netzwerk 24 aus den Längsleitungen 11 und Querleitungen 12 in Verbindung steht. Der Mischer 15 übernimmt hier die Aufgabe, die z. B. von der Steuersäule kommenden digitalen Lichtsignale so aufzubereiten, daß diese unter logischer Berücksichtigung weiterer Informationen an die Informationssysteme 16 bis 18 weitergeleitet werden. Werden dem Mischer 15 z. B. ein Signal, das einer vorgegebenen Soll-Flughöhe entspricht und ein weiteres von einem Höhenmesser 22 geliefertes Signal, das der Ist-Höhe entspricht, zugeführt, so bildet der Mischer 15 ein zur Einstellung der Soll-Flughöhe dienendes Differenz-Signal, das über die Informationssysteme 16 bis 18 in das Netzwerk 24 eingegeben wird, Dieses an die Servo-Einheit 14.01 des Höhenruders adressierte Telegramm wird nun von dieser Einheit aufgenommen und in einen entsprechenden Ausschlag des Ruders 1 umgesetzt, der das Flugzeug ohne Einwirkung des Piloten wieder in die Soll-Flughöhe zurückführt. Auf die gleiche Weise können von einem Navigationsgerät 23 gelieferte Kurs-Istwerte durch den Mischer 15 mit einem vorgegebenen Soll-Kurs verglichen werden. Das hierbei entstehende Differenz-Signal wird in einen an die Servo-Einheit 14.02 des Seitenruders 2 und an die Servo-Einheiten 14.03 und 14.04 der Querruder 3 adressierten Steuerbefehl umgewandelt und über die Informationssysteme 16, 17 und 18 und weiter über das Netzwerk 24 den genannten Servo-Einheiten zugeführt. Diese antworten mit einem Ruderausschlag, der die erforderliche Kurskorrektur bewirkt. Ein über das Geber-Netzwerk 20 an den Mischer 15 angeschlossenes nicht dargestelltes Anzeige- und Bediengerät dient u. a. der graphischen Darstellung der Soll- und Istwerte unter Verwendung üblicher Sinnbilder. Wird die Anordnung auf manuellen Betrieb umgeschaltet, so entfällt der Soll-Istvergleich durch den Mischer und die über das Geber-Netzwerk 20 ankommenden Steuerbefehle werden direkt in Form entsprechender Telegramme an die betreffenden Servo-Einheiten weitergeleitet. An das Geber-Netzwerk 20 sind alle einen Steuerbefehl abgebenden Steuerorgane 9, wie Steuersäulen, Pedale, Trimmrad usw. über einen dreifach ausgeführten Lichtleiter angeschlossen. Bei den vorbeschriebenen Abläufen besteht die Aufgabe der Informationssysteme 16 bis 18 im wesentlichen darin, den Verkehr der in die Mischereinheit 15 ein- und auslaufenden Daten durch einen bestimmten Takt zu steuern und die Befehls- bzw. Abfragetelegramme mit den entsprechenden Adressen zu versehen.

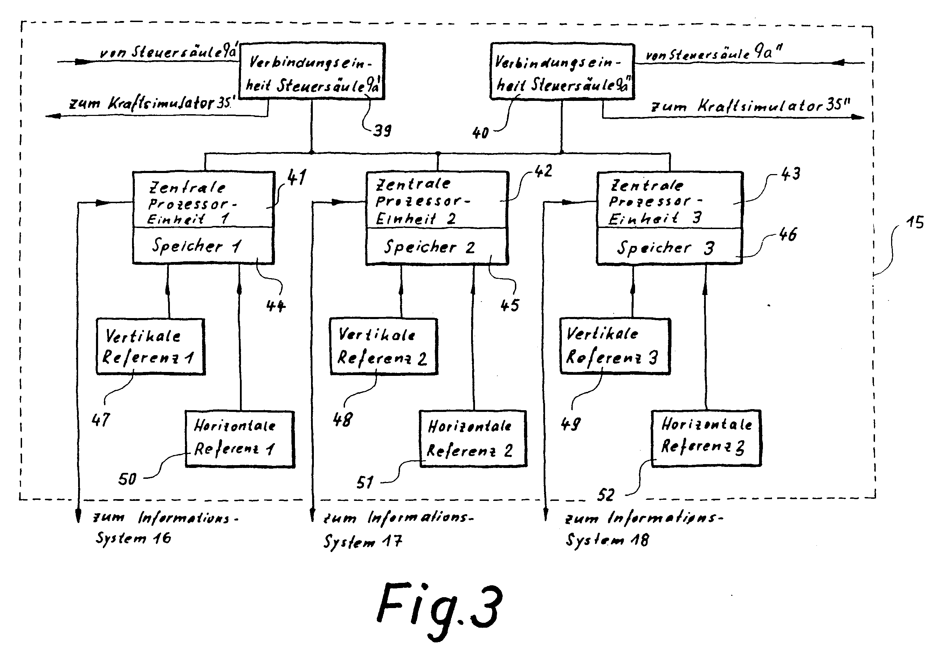

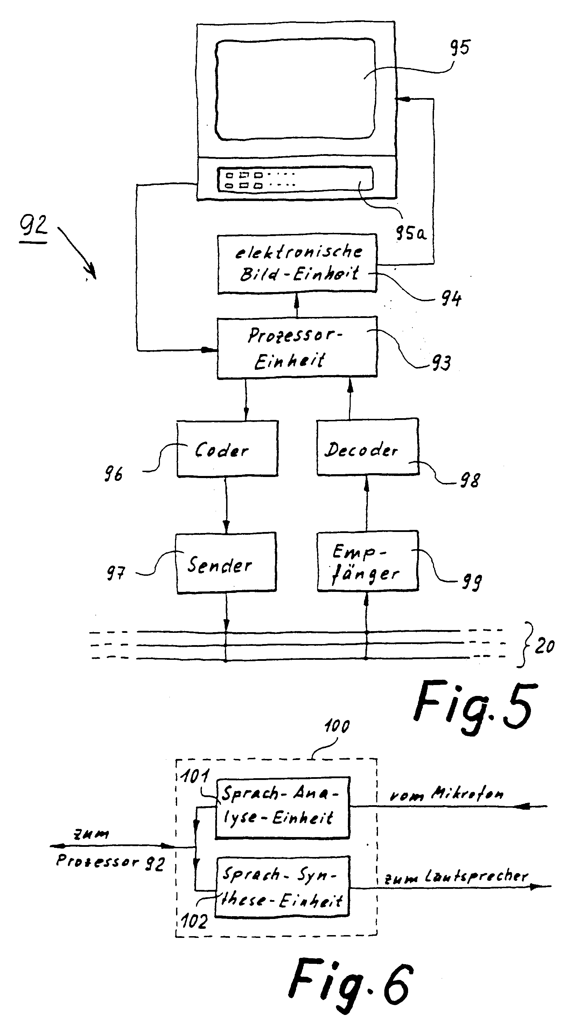

Fig. 3 zeigt die innere Schaltung eines Mischers 15 mit zwei je einer Steuersäule 9a zugeordneten Verbindungseinheiten 39 und 40 mit drei zentralen Prozessor-Einheiten 41, 42 und 43, denen jeweils ein Speicher 44, 45 und 46 zugeordnet ist. Der Mischer 15 weist weiterhin für jedes Organ, das einen Steuerbefehl abgeben kann, eine entsprechende, hier nicht gezeigte Verbindungseinheit auf. Der Mischer 15 weist weiterhin pro Speicher je eine vertikale Referenz 47, 48, 49 und eine horizontale Referenz 50, 51, 52 auf. Zur Verbindung mit den Steuersäulen 9a und Kraftsimulatoren 35 dienen Lichtleiter. Die einzelnen internen Funktions-Einheiten des Mischers 15 sind entsprechend Fig. 5 durch elektrische Leitungen miteinander verbunden. Die Verbindungen mit den Informationssystemen 16 bis 18 erfolgen ebenfalls über elektrische Leitungen. Die z. B. von der Steuersäule 9a kommenden codierten Signale gelangen in die Verbindungs-Einheit 39, die ihrerseits im wesentlichen aus Verstärkern und Codewandlern besteht. Hier werden die genannten Signale verstärkt sowie umkodiert und auf den mischerinternen Datenbus geleitet, der mit den zentralen Prozessor-Einheiten 41, 42 und 43 in Verbindung steht. Eine prioritätsschaltung innerhalb der Verbindungseinheiten sorgt dafür, daß die Signale der Steuersäule 9a' so lange Priorität haben, bis durch Bedienung die Steuersäule 9a" eingeschaltet wird und diese dann die Führung übernimmt. In den Speichern 44, 45 und 46 werden die von den Referenzen 47 bis 49 und 50 bis 52 gelieferten, der Istlage des Flugzeuges entsprechenden Daten gespeichert und über die Prozessor-Einheiten 41 bis 43 miteinander verglichen. Hierbei werden diejenigen Daten als richtig erkannt, die in der Mehrzahl der Prozessor-Einheiten 41 bis 43 übereinstimmend vorliegen. Die Prozessor-Einheit mit abweichender Information wird als fehlerhaft erkannt und über den mischerinternen Datenbus gesperrt. Dies geschieht mittels eines speziellen Fehlercodesignals. Die Prozessor-Einheiten 41 bis 43 sind es auch, die die erforderlichen Operationen für die vorerwähnte automatische Flugführung ausführen. Ein entsprechender Prozessor ist z. B. unter der Bezeichnung PDP 11/70 bekannt. Entsprechend Fig. 1 verfügt die gesamte Anordnung über drei Signal-Prozessoren 10 und damit auch über drei Mischer 15, was eine entsprechende Steigerung der Zuverlässigkeit bewirkt.

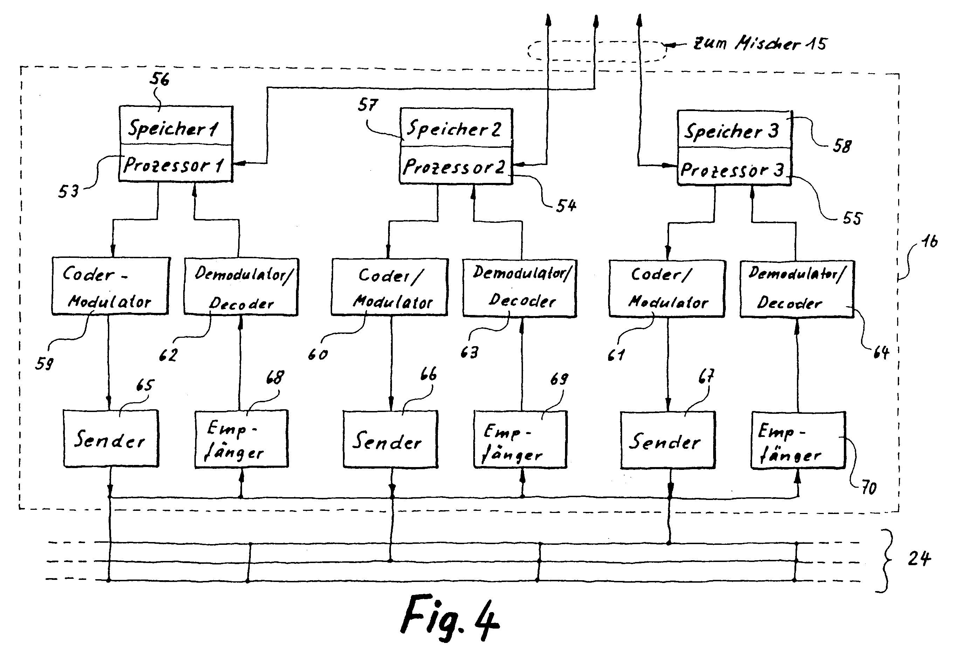

Fig. 4 zeigt ein Blockschaltbild eines optronischen Informationssystems, wie es in dreifacher Ausführung nach Fig. 2 innerhalb des Signal-Prozessors 10 mit den Positionen 16, 17 und 18 vorgesehen ist. Das dargestellte System weist drei Prozessoren 53, 54, 55 mit drei Speichern 56, 57, 58, drei Coder/Modulatoren 59, 60, 61, drei Demodulator/Decodern 62, 63, 64, drei Sendern 65, 66, 67 und drei Empfängern 68, 69, 70 auf, die miteinander verbunden sind. Wesentlicher Bestandteil der Sender 65 bis 67 ist jeweils eine Laserdiode, die ein Lichtsignal an das Netzwerk 24 abgeben kann. Die Empfänger bestehen im wesentlichen aus je einem Silizium-Fototransistor, der als Detektor für über das Netzwerk 24 ankommende Lichtsignal dient, d. h. diese wieder in elektrische Signale umwandelt. Das gezeigte Informationssystem besteht zur Steigerung der Zuverlässigkeit aus drei Zweigen, die in Parallelschaltung arbeiten. Zur Erläuterung der Wirkungsweise wird zunächst nur der links gezeigte Zweig, bestehend aus dem Prozessor 53 mit dem Speicher 56 sowie dem Coder/Modulator 59, dem Demodulator/Decoder 62, dem Sender 65 und dem Empfänger 68, betrachtet. Diese Schaltung steuert den zwischen dem Netzwerk 24 und dem Mischer 15 ablaufenden Datenverkehr, wobei ein in den Prozessor 53 integrierter Oszillator als Taktgeber fungiert. Ein aus dem Mischer 15 zum Prozessor 53 gelangendes elektrisches Signal wird dem Coder/Modulator 59 zugeführt. Innerhalb des Coder-Teils wird das Datentelegramm von der prozessorbezogenen in die peripheriebezogene Wort- und Adress-Struktur umgewandelt. Anschließend durchläuft das Telegramm den Modulatorteil, wo es einem hochfrequenten Träger in Form einer Frequenzmodulation aufgeprägt wird. Der entsprechende reine Dateninhalt wird dann in einem Zwischenschritt durch Demodulation zurückgewonnen und einem festen anderen Träger durch Amplitudenmodulation aufgeprägt. Das so entstandene Signal wird innerhalb des Senders 65 verstärkt und der Laserdiode zugeführt, die ein dem Diodenstrom analoges Lichtsignal an das Netzwerk 24 abgibt. In umgekehrter Richtung wird ein über das Netzwerk 24 ankommendes Lichtsignal vom Empfänger 68 aufgenommen und durch den eingebauten Fototransistor in ein amplitudenmoduliertes elektrisches Signal zurückverwandelt, das dann zum Demodulator/Decoder 62 gelangt.

Am Ausgang des Demodulators/Decoders 62 liegt dann wieder ein Datentelegramm in prozessorbezogener Struktur vor, das nun durch den Prozessor 53 weiterverarbeitet wird. Die beiden anderen Zweige des Systems führen im gleichen Takt die gleichen Operationen aus, wobei der synchronisierende Impuls vom Taktgeber des Prozessors 53 ausgeht. Sollte dieser Taktgeber ausfallen, so wird der links dargestellte Zweig automatisch abgeschaltet und der nächst vorgesehene Taktgeber steuert die Synchronisation . Auch die weiterhin nach Fig. 2 vorgesehenen Informationssysteme 17 und 18 werden im Normalfall durch den Prozessor 53 synchronisiert. Der entsprechende Sychronisier-Impuls wird über das Netzwerk 24 geleitet.

Fig. 5 zeigt ein Blockschaltbild eines Anzeige- und Bedien=gerätes 92. Das Gerät weist eine Prozessor-Einheit 93, eine elektronische Bild-Einheit 94, einen Bildschirm 95, eine Tastatur 95a, einen Coder 96, einen Sender 97, einen Decoder 98 und einen Empfänger 99 auf, die miteinander verbunden sind. Der Sender 97 und der Empfänger 99 stehen über Lichtleiter mit dem Geber-Netzwerk 20 in Verbindung. Über die alphanumerische Tastatur 95a, die z. B. nach ASCI-Code (American Standard Code for Information Interchange) arbeitet, erfolgt die Eingabe von Betriebsdaten in das Geber-Netzwerk 20. Für feste Betriebsarten stehen bestimmte mit entsprechenden Symbolen versehene Wahltasten zur Verfügung. Hier können z. B. die Grundbetriebsarten wie manuelle (MANOP), halbautomatische (SEMOP) oder automatische (AUTOP) Steuerung gewählt werden. Dabei hat die Prozessor-Einheit 93 u. a. die Aufgabe, die von der Tastatur 95a gelieferten Signale derart aufzubereiten, daß diese in Form abgefragter Datentelegramme über den Coder 96 und den Sender 97 per Lichtleiter zu dem Mischer 15 gelangen. Der Bildschirm 95 steht über die elektronische Bild-Einheit 94 mit der Prozessor-Einheit 93 in Verbindung. Die Bild-Einheit 94 umfaßt im wesentlichen einen Signalgenerator und eine Codewandlermatrix, wie sie üblicherweise zur Bilddarstellung verwendet werden. Eine derartige Schaltung ist aus Klein: "Mikrocomputersysteme", Francis Verlag, München, 1979, 2. Aufl. S. 32 bekannt. Der Bildschirm 95 ist als Halbleiter-Bildschirm ausgeführt und dient sowohl zur Darstellung der aktuellen Lage des Flugzeuges F als auch zur Darstellung vorgenommener Steuerkorrekturen. Der Signalgenerator der Bild-Einheit 94 dient hierbei zur Aufbereitung der sinnbildlichen Darstellung von Lage- und Kursinformationen (Balken, Kurszahlen), zur Anfertigung alphanumerischer Zeichen nach ASCI-Code und zur Aufbereitung der Symbole für die Steuerbefehle. Die Codewandlermatrix steuert die Punktmatrixfelder des Bildschirms 95, so daß die im Code des Signalgenerators vorliegenden digitalen Signale in die entsprechenden Darstellungen umgesetzt werden. Die gesamte Anordnung weist drei der vorbeschriebenen Anzeige- und Bediengeräte 92 auf, die über das Geber-Netzwerk 20 mit den Mischern 15 korrespondieren. Dadurch verfügen beide Piloten und der Flugingenieur jeweils über ein eigenes Anzeige- und Bediengerät 92, wobei die jeweils gezeigten Darstellungen und ausgeführten Bedienungsmaßnahmen in der Regel infolge der unterschiedlichen Aufgaben der Bedienpersonen völlig verschieden sind. Auch hier sind die Möglichkeiten, die sich durch entsprechende Programmierung der gezeigten Schaltung ergeben, nur angedeutet.

Fig. 6 zeigt ein Blockschaltbild eines Dialog-Gerätes 100, mit dem sich eine sinnvolle Ausgestaltung der Anordnung ergibt. Das Dialog-Gerät 100 besteht im wesentlichen aus einer Sprach-Analyse-Einheit 101, die mit einem Mikrofon in Verbindung steht und einer Sprach-Synthese-Einheit 102, die mit einem Lautsprecher verbunden ist. Das Dialog-Gerät 100 korrespondiert mit der Prozessor-Einheit 93 des Anzeige- und Bediengerätes 92 nach Fig. 8 und erlaubt einen sprachlichen Dialog der Bedienperson mit der beschriebenen Anordnung. Hierbei werden die per Sprache über das Mikrofon eingegebenen Code-Wörter durch die Sprach-Analyse-Einheit anhand eines hier abgespeicherten Silbenschatzes erkannt und in Form entsprechender digitaler Telegramme in die Prozessor-Einheit 93 eingegeben. Dies geschieht unter Verwendung eines sog. PROM-Sprachdecoders (PROM = Programed read only memory). Umgekehrt kann jetzt eine für die Bedienperson wichtige Information über den Lautsprecher ausgegeben werden. Dabei erfolgt die Sprach-Synthese innerhalb der Einheit 102 durch einen PROM-Sprachcoder, der die von der Prozessor-Einheit 93 gelieferten Telegramme aufschlüsselt und die entsprechend auszugebenden Worte aufgrund eines hier abgespeicherten Silbenschatzes zusammenstellt und diese tonfrequenten Signale dem Lautsprecher über einen hier nicht gezeigten Leistungsverstärker zuführt. Derartige Sprach-Coder bzw. -Decoder sind an sich bekannt und z. B. in der Zeitschrift "Elektronik", Heft 14, 1980, ab Seite 54 anhand von Anwendungsbeispielen beschrieben.

Bei der gesamten vorbeschriebenen Anordnung wird aufgrund der erfindungsgemäßen Anwendung von Lichtleitertechnik, Digitaltechnik auf der Basis von Mikroprozessoren und automatischer Defekt-Erkennung und -Beseitigung mittels logischer Schaltungen eine wesentlich gesteigerte Zuverlässigkeit erreicht. Würde diese Anordnung mit einer Energieversorgung üblicher Art betrieben, so würde der erreichte Zuverlässigkeitswert erheblich reduziert werden. Es ist daher in Fortführung des Erfindungsgedankens vorgesehen, daß die Energieversorgung der Anordnung durch eine gleichwertige Energieversorgungseinrichtung erfolgt.

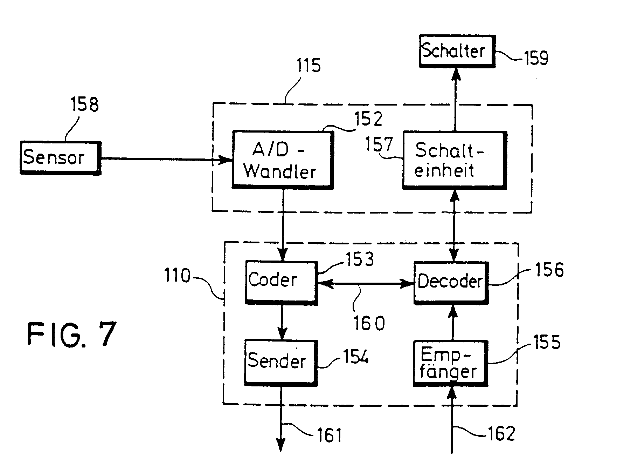

Fig. 7 zeigt eine interne Prinzipschaltung s. B. der Meßund Schalteinheit 115 nach Fig. 10. Diene Einheit besteht im wesentlichen aus einem A/D-Wandler (Analog/Digital-Wandler) 152 und einer Schalteinheit 157. Zweckmäßigerweise ist hier auch die Übertragungseinheit 110 mit ihrer internen Schaltung dargestellt. Diese Einheit besteht im wesentlichen aus einem Coder 153, einem Sender 154, einem Empfänger 155 und einem Decoder 156, die wie in der Schaltung angegeben, miteinander verbunden sind. Die Wirkungsweise der Meß- und Schalteinheit 115 wird nun am Beispiel der Hilfsturbine 112 erläutert. Wenn die Hilfsturbine 112 in Betrieb ist, wird mittels eines Sensors 158 Z. B. die Ausgangsspannung des Generators 113 gemessen und in Form eines entsprechenden analogen Signals in den A/D-Wandler 152 eingegeben. Dieser erstellt ein entsprechendes digitalen Signal, das er an den Coder 153 weiterleitet. Der Coder 153 versieht dieses Signal mit der Adresse der Prüfeinheit 135 und leitet das nunmehr inhaltlich vollständige Telegramm an den Sender 154 weiter. Durch die Querverbindung 160 ist sichergestellt, daß das Telegramm nur auf den Sender 154 weitergeleitet wird, wenn ein entsprechend adressiertes Abfragetelegramm der Prüfeinheit 135 über den Empfänger 155 und den Decoder 156 eingegangen ist. Der Sender 154 und der Empfänger 155 sind über die Lichtleiter 161 und 162 an das Netzwerk 24 angeschlossen und die entsprechenden Telegramme werden in Form digitaler Lichtsignale ausgetauscht. Mit Hilfe weiterer Sensoren können auch andere Größen gemessen und an die Prüfeinheit 135 weitergeleitet werden, wie z. B. die Turbinendrehzahl, der Generatorstrom, der Hydraulikdruck usw. Wird von der Prüfeinheit ein Defekt an der Hilfsturbine festgestellt, so trifft über das Netzwerk 24 ein an die Schalteinheit 157 adressiertes Telegramm mit dem Abschaltbefehl über den Empfänger 155 ein, das vom Decoder 156 erkannt und gelesen wird, der daraufhin ein entsprechendes Signal an die Schalteinheit 157 weiterleitet. Entsprechend dem Inhalt des Telegramms veranlaßt die Schalteinheit 157 die Trennung aller aus Sicherheitsgründen zu lösenden Wirkverbindungen des Flugzeugs mit der Hilfsturbine 112, dem Generator 113 und der Pumpe 114. Dabei kann z. B. ein Schalter 159 zum Abschalten des Generators 113 vorgesehen sein.

**Patentansprüche**

1. Anordnung, insbesondere für Luftfahrzeuge, zur Übertragung von Steuersignalen zum Ansteuern von Steuerflächen, mit einem durch Mikroprozessoren gesteuerten Datenbussystem, wobei die einzelnen Leitungen aus Lichtleitern bestehen,
dadurch **gekennzeichnet,** daß die Lichtleiter ein mehrfach vermaschtes Netzwerk (24) bilden, woran Steuerorgane (9) zur Erzeugung von Steuerbefehlen in Form digitaler Lichtsignale über in Signalprozessoren (10) eingebaute Mischer (15) und Informationssysteme (16,17,18) an das Netzwerk (24) angeschlossen sind und die Steuerflächen (1,2,3,4,5) sowie andere Steuerelemente durch über das Netzwerk adressierbare Servo-Einheiten (14) anzusteuern und zu betätigen sind.

2. Anordnung, nach Anspruch 1,
dadurch **gekennzeichnet,** daß die Servoeinheiten (14) Stellungsgeber (78) aufweisen, die auf ein entsprechendes Abfragesignal ein Signal liefern, das der momentanen Betriebsstellung einer Steuerfläche (1,2,3,4,5) entspricht.

3. Anordnung, nach Anspruch 1 oder 2,
dadurch **gekennzeichnet,** daß zum Signalaustausch zwischen den Steuerorganen (9) und dem Mischer (15) ein cockpitseitiges Gebernetzwerk (20) angeordnet ist.

4. Anordnung nach einem der Ansprüche 1 bis 5, dadurch gekennzeichnet, daß mindestens ein Anzeige- und Bediengerät (92) mit einem Bildschirm (95) und einer Tastatur (95a) vorhanden ist, das mit den Mischern über das Geber-Netzwerk (20) verbunden ist.

5. Anordnung nach einem der Ansprüche 1 bis 6, dadurch gekennzeichnet, daß an das Anzeige- und Bediengerät (92) ein Dialog-Gerät (100) angeschlossen ist, das eine Sprach-Analyse-Einheit (101) und eine Sprach-Synthese-Einheit aufweist.

6. Anordnung nach Anspruch 1, dadurch gekennzeichnet, daß die Informationssysteme (16,17,18) je mindestens einen Speicher (56), Prozessor (53), Coder-Modulator (59), Demodulator-Decoder (62), Sender (65) und einen Empfänger (68) aufweisen.

7. Anordnung nach einem der Ansprüche 1 bis 8, dadurch gekennzeichnet, daß alle im Netzwerk (24), Geber-Netzwerk (20) installierten Lichtleitungen sowie die Signal-Prozessoren (10), Mischer (15) und Informationssysteme (16,17,18) dreifach parallel zueinander vorhanden sind.

8. Anordnung nach einem der Ansprüche 1 bis 18, dadurch gekennnzeichnet, daß die Lichtleiter des Netzwerkes (24) aus faseroptischen Leitern bestehen und eine Einfärbung aufweisen.

**Claims**

1. An arrangement, more particularly for aircraft, for transmitting control signals for controlling control surfaces, with a data bus system controlled by microprocessors, in which the individual lines consist of photoconductors, **characterised in that** the photoconductors form a multiply interconnected network (24) to which control elements (9) are connected for producing control commands in the form of digital light signals via mixer (15) and information systems (16,17,18) which are built into signal processors (10) and the control surfaces (1,2,3,4,5) and other control elements are to be controlled and actuated by servo units (14) which can be addressed by means of the network.

2. An arrangement according to claim 1, **characterised in that** the servo units (14) have position sensors (78) which deliver a signal in response to a corresponding interrogation signal, the former corresponding to the instantaneous operating position of a control surface (1,2,3,4,5).

3. An arrangement, according to claim 1 or 2, **characterised in that** a cockpit side signal network (20) is arranged between the control elements (9) and the mixer (15) for signal exchange.

4. An arrangement according to any one of claims 1 to 5, **characterised in that** at least one display and operating device (92) is present having a picture screen (95) and a keyboard (95a), the device being connected to the mixers via the signal network (20).

5. An arrangement according to any one of claims 1 to 6, **characterised in that** a dialogue device (100) is connected to the display and operating device (92) and has a speech analysis unit (101) and a speech synthesis unit.

6. An arrangement according to claim 1, **characterised in that** the information systems (16, 17, 18) each have at least one memory (56), processor (53), coder/modulator (59), demodulator/decoder (62), transmitter (65) and receiver (68).

7. An arrangement according to any one of claims 1 to 8, **characterised in that** all of the photoconductors which are installed in the network (24), signal network (20) and the signal processors (10), mixers (15) and information systems (16,17,18) are present three times in parallel to each other.

8. An arrangement according to any of claims 1 to 7, characterised that the photoconductors of the network (24) consist of fiber-optical conductors, having an inking.

## Revendications

**1.** Installation notamment pour avion, pour la transmission de signaux de commande servant à commander des surfaces de commande (volets) par l'intermédiaire d'un système de données commandé par des microprocesseurs, et dont les différentes lignes sont des fibres optiques, montage caractérisé en ce que les fibres optiques forment un réseau à mailles multiples (24) et les organes de commande (9), pour générer les ordres de commande sous forme optique, numérique sont reliés par des mélangeurs (15) montés dans les processeurs de signaux (10) et des systèmes d'information (16, 17, 18) sur le réseau (24) et en ce que les surfaces de commande (1, 2, 3, 4, 5) ainsi que d'autres éléments de commande sont commandés et actionnés par des moteurs d'asservissement (14) adressés par le réseau.

**2.** Installation selon la revendication 1, caractérisée en ce que les servomoteurs (14) comportent tous des capteurs de position (78) fournissant un signal en réponse à un signal de demande, correspondant à la position de fonctionnement instantanée d'une surface de commande (1, 2, 3, 4, 5).

**3.** Installation selon la revendication 1 ou 2, caractérisée en ce qu'un réseau de capteurs (20) situé au niveau du cockpit est prévu entre les organes de commande (9) et le mélangeur (15) pour l'échange de signaux.

**4.** Installation selon l'une des revendications 1 à 5, caractérisée par au moins un appareil d'affichage et de manoeuvre (92) avec un écran image (95) et un clavier (95a) reliés aux mélangeurs par le réseau de capteurs (20).

**5.** Installation selon l'une des revendications 1 à 6, caractérisée par un appareil de dialogue (100) relié à l'appareil d'affichage et de manoeuvre (92) et qui comprend une unité d'analyse vocale (101) et une unité de synthèse vocale.

**6.** Installation selon la revendication 1, caractérisée en ce que les systèmes d'information (16, 17, 18) comportent chacun au moins une mémoire (56), un processeur (53), un codeur-moduleur (59), un démoduleur-décodeur (62), un émetteur (65) et un récepteur (68).

**7.** installation selon les revendications 1 à 6, caractérisée en ce que tous les conducteurs de lumière du réseau (24) et du réseau de capteurs (20) ainsi que les processeurs de signaux (10), les mélangeurs (15) et les systèmes d'information (16, 17, 18) sont branchés en parallèle de manière triple.

**8.** Installation selon les revendications 1 à 7, caractérisée en se que les conducteurs de lumière du réseau (24) se compose de conducteur fibre-optique presentent une teinture.

FIG. 1

FIG. 2

Mischer — 15

Info.-system 1 — 16
Info.-system 2 — 17
Info.-system 3 — 18

16a
17a
18a

19
20
10

24
12
11
12

23 — Navigation
22 — Höhenmesser

14.01 — Höhenruder
14.02 — Seitenruder
14.03 — Querruder 1
14.04 — Querruder 2
14.05 — Trimmflosse
14.06 — Landeklappen
14.07 — Vorflügel
14.08 — Bugfahrwerk
14.09 — Triebwerk 1
14.10 — Triebwerk 2

Fig.3

Fig. 4

11

_92_

elektronische
Bild-Einheit

95

95a

94

Prozessor-
Einheit

93

Coder

96

Decoder

98

Sender

97

Empfänger

99

20

# Fig.5

100

101

Sprach-Ana-
lyse-Einheit

vom Mikrofon

zum
Prozessor 92

Sprach-Syn-
these-Einheit

zum Lautsprecher

102

# Fig.6

FIG. 7